# EUROPÄISCHE PATENTANMELDUNG

(11) **EP 1 085 268 A2**
(43) Veröffentlichungstag der Anmeldung: **21.03.2001**
(21) Anmeldenummer: 00116873.1
(22) Anmeldetag: 14.08.2000
(51) Int. Cl.: F24D 3/14, F24D 5/10

(54) **Flächige Wärmetauscheranordnung für Flächenheizungen**

(30) Priorität: 14.09.1999 DE 19944027
(71) Anmelder: Siegmund, Helmut, 53604 Bad Honnef (DE)
(72) Erfinder: Siegmund, Helmut, 53604 Bad Honnef (DE)
(74) Vertreter: Schaumburg, Thoenes & Thurn

(57) **Zusammenfassung**

Flächige Wärmetauscheranordnung für Flächenheizungen in Bauwerken, umfaßt eine Mehrzahl von Wärmetauscherblöcken (10), die mit mindestens einer ein Wärmeträgermedium führenden Rohrleitung (20) in wärmeleitender Verbindung stehen und zwei zueinander parallele Auflageflächen (22) haben, zwischen denen die Rohrleitung (20) verläuft. Dabei hat jeder Wärmetauscherblock (10) eine Mehrzahl von senkrecht zu den Auflageflächen (22) und der zwischen diesen verlaufenden Rohrleitung (20) und parallel zueinander gerichteten Zwischenwänden (16), die jeweils paarweise einen beidendig offenen Hohlraum zwischen sich begrenzen.

## Beschreibung

Die Erfindung betrifft eine flächige Wärmetauscheranordnung für Flächenheizungen in Bauwerken.

Fußbodenheizungen, bei denen die das Wärmeträgermedium führenden Rohre in den Estrich des Bodens eingebettet sind, haben im allgemeinen ein relativ träges Ansprechverhalten. Luftdurchströmte Hohlraumböden, in denen Heiz- oder Kühlelemente angeordnet sind, erlauben im allgemeinen eine raschere Änderung der Raumtemperatur. Auf der anderen Seite sind die Konstruktionen, die einerseits einen stabilen Hohlraumboden und andererseits einen guten Wärmeübergang von dem Wärmeträgermedium auf die den Hohlraumboden durchströmende Luft einerseits und den Oberboden andererseits gewährleisten, relativ aufwendig im Aufbau und der Herstellung.

Der Erfindung liegt die Aufgabe zugrunde, eine Wärmetauscheranordnung der eingangs genannten Art anzugeben, die sich insbesondere zum Einbau in Fußböden und Hohlböden, aber auch z.B. in Wänden und Decken eignet, einfach herzustellen ist und einen guten Wärmeübergang von dem Wärmeträgermedium auf die zu temperierenden Flächen bzw. die zu temperierende Raumluft gewährleistet.

Diese Aufgabe wird erfindungsgemäß dadurch gelöst, daß die Wärmetauscheranordnung eine Mehrzahl von Wärmetauscherblöcken umfaßt, die mit mindestens einer ein Wärmeträgermedium führenden Rohrleitung in wärmeleitender Verbindung stehen und zwei zueinander parallele Auflageflächen haben, zwischen denen die Rohrleitung verläuft.

Die Auflageflächen der Wärmetauscherblöcke bieten einerseits eine stabile großflächige Auflage für die zu temperierende Fläche und gewährleisten andererseits einen guten Wärmeübergang von den Wärmetauscherblöcken zu der zu temperierenden Fläche. Gleichzeitig gewährleisten die Wärmetauscherblöcke bei dem Einbau in einen Hohlboden einen guten Wärmeaustausch mit der den Hohlboden durchströmenden Luft.

Dieser Wärmeaustausch läßt sich noch verbessern, wenn jeder Wärmetauscherblock eine Mehrzahl von senkrecht zu den Auflageflächen und der zwischen diesen verlaufenden Rohrleitung und parallel zueinander gerichtete Zwischenwände hat, die jeweils paarweise einen beidendig offenen Hohlraum zwischen sich begrenzen. Durch diesen Aufbau des Wärmetauscherblockes wird die Wärmetauscherfläche zwischen dem Block und der den Hohlraum durchströmenden Luft wesentlich vergrößert. Damit lassen sich auf einfache Weise Hohlraumböden bauen, bei denen einerseits ein großflächiger Wärmeübergang auf den Oberboden möglich ist und andererseits durch den Hohlraum geleitete Luft temperiert werden kann, so daß die Temperatur der Raumluft rasch erhöht oder gesenkt werden kann.

Um die Wärmeleitung und den Wärmeaustausch mit den anliegenden Flächen bzw. der vorbeistreichenden Luft zu verbessern, ist es zweckmäßig, wenn die Wärmetauscherblöcke aus Metall bestehen.

Gemäß einer bevorzugten Ausführungsform ist jeder Wärmetauscherblock aus rechtwinkligen C- oder Z-Profilabschnitten aufgebaut, die so aneinandergereiht sind, daß ihre miteinander fluchtenden Seitenschenkel die Auflageflächen und die zueinander parallelen Mittelstege die Zwischenwände bilden. Die Rohrleitung kann dabei durch miteinander fluchtende Bohrungen in den Mittelstegen geführt sein. Mit diesem Aufbau können auf einfachste Weise Wärmetauscherblöcke unterschiedlicher Größe hergestellt werden. Vorzugsweise werden die einzelnen Profilabschnitte starr mit der Rohrleitung verbunden. Sofern diese aus Metall besteht, läßt sich das auf einfache Weise dadurch erreichen, daß die Rohrleitung nach dem Auffädeln der Profilabschnitte durch Erzeugung eines hohen Innendruckes ausgedehnt wird, so daß sich die Rohrwand eng an die jeweilige Bohrungswand der Profilabschnitte legt.

Bei einer alternativen Ausführungsform sind in mindestens einer Auflagefläche Rillen ausgebildet, in die die Rohrleitung einlegbar, vorzugsweise kraftschlüssig einklipsbar ist oder mit deren Hilfe ein Wärmetauscherblock auf eine Rohrleitung aufklipsbar ist.

Um die Arbeit beim Verlegen der Flächenheizung zu erleichtern, können die Wärmetauscherblöcke in der gewünschten Wärmeleistung entsprechenden Abständen auf einer biegsamen Unterlage befestigt sein, beispielsweise einem Kunststoffgitter ode einer Kunststoffolie. Die Befestigung kann dabei durch Schweißen, Kleben, Klipsen mit Widerhaken oder Binder erfolgen. Die mit der Unterlage verbundenen Wärmetauscherblöcke werden dann mit der Unterlage in Bahnen gerollt geliefert. Bei der Montage werden entsprechend der Raumgröße Bahnabschnitte zurechtgeschnitten und ausgelegt. Anschließend brauchen nur noch die Heizrohre in die Wärmetauscherblöcke von oben eingeklipst zu werden.

Mit der erfindungsgemäßen Wärmetauscheranordnung kann ein Hohlraumboden auf einfache Weise dadurch aufgebaut werden, daß die Wärmetauscherblöcke direkt auf den Unterboden gelegt und der Oberboden wiederum direkt auf die Wärmetauscherblöcke aufgelegt wird. Die Wärmetauscherblöcke bilden dann sowohl die Wärmetauscher als auch die Distanzelemente, welche Oberboden und Unterboden in stabiler Weise trennen. Die Wärmetauscherblöcke können jedoch auch durch Platten abgedeckt werden, um einen Flüssigestrich aufzutragen.

Bei einer bevorzugten Ausführungsform sind die Wärmetauscherblöcke auf einer zwischen Unterboden und Oberboden liegenden Distanzplatte angeordnet, die zur Auflage auf dem Unterboden bestimmte Distanzelemente und Aufnahmetaschen zur teilweisen Aufnahme der Wärmetauscherblöcke hat. Auf diese Weise entstehen zwischen dem Oberboden und dem Unterboden zwei durch die Distanzplatte voneinander getrennte Hohlräume, die auf unterschiedliche Weise von Luft durchströmt werden können, so daß eine differenzierte Raumtemperierung ermöglicht wird. Auch können einzelne Blöcke, die beispielsweise am Rande der zu temperierenden Fläche angeordnet sind, von den restlichen Wärmetauscherblöcken der Wärmetauscheranordnung durch Zwischenwände getrennt werden, so daß nur ein Teil der Wärmetauscherblöcke mit Luft beaufschlagt wird, während der übrige Teil seine Wärme im wesentlichen an die Fußbodenfläche abgibt.

Man erkennt, daß die erfindungsgemäße Wärmetauscheranordnung nicht nur sehr einfach in ihrer Herstellung ist, sondern auch den einfachen Aufbau von Flächenheizungen ermöglicht, deren Ansprechverhalten leicht steuerbar ist. Es versteht sich, daß die erfindungsgemäße Wärmetauscheranordnung nicht nur zum Heizen sondern auch zum Kühlen von Flächen und Räumen verwendet werden kann und daß sie sowohl in Fußböden als auch an Wänden oder Decken eingesetzt werden kann.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigen:
- Figur 1: eine perspektivische Ansicht eines einzelnen Wärmetauscherblockes,
- Figur 2: eine perspektivische Draufsicht auf eine auf einem Unterboden verlegte erfindungsgemäße Wärmetauscheranordnung,
- Figur 3: eine perspektivische Darstellung eines Ausschnittes aus einem erfindungsgemäßen Hohlraumboden,
- Figur 4: eine schematische Schnittdarstellung durch eine Ausführungsvariante eines erfindungsgemäßen Hohlraumbodens,
- Figur 5: eine perspektivische Ansicht einer alternativen Ausführungsform eines Profilabschnittes zum Aufbau eines Wärmetauscherblockes und
- Figur 6: eine schematische perspektivische Ansicht einer Gittermatte mit darauf befestigten Wärmetauscherblöcken.

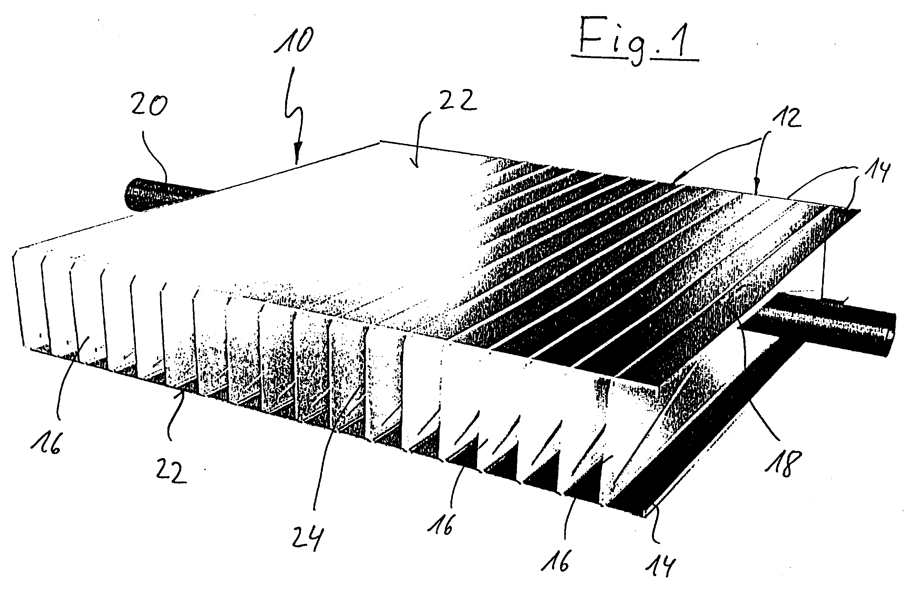

Figur 1 zeigt einen erfindungsgemäßen Wärmetauscherblock 10, der aus einer Vielzahl von C-Profilabschnitten 12 aufgebaut ist. Jeder dieser C-Profilabschnitte 12 hat zwei zueinander parallele Seitenschenkel und einen rechtwinklig zu diesem gerichteten und sie miteinander verbindenden Mittelsteg 16. In dem Mittelsteg 16 ist eine Bohrung 18 ausgebildet, die zum Durchtritt einer Rohrleitung 20 dient, welche von dem Wärmeträgermedium durchströmt wird.

Gemäß der Darstellung in Figur 1 werden die C-Profilabschnitte 12 so auf die Rohrleitung 20 aufgefädelt, daß ihre Seitenschenkel 14 jeweils miteinander fluchten und zwei Auflageflächen 22 bilden. Die Mittelstege 16 verlaufen parallel zueinander und begrenzen einen beidendig offenen Hohlraum 24, durch den Luft hindurchgeleitet werden kann. Die C-Profilabschnitte 12 bestehen aus Metall, vorzugsweise Aluminium und können im Stranggußverfahren hergestellt oder aus Metallblech gestanzt und gebogen werden. Die Verbindung mit der beispielsweise aus Kupfer hergestellten Rohrleitung 20 kann in der Weise erfolgen, daß nach dem Auffädeln und Ausrichten der C-Profilabschnitte 12 in der Kupferleitung 20 ein hoher Innendruck erzeugt und diese etwas gedehnt wird, so daß sie sich eng an die Ränder der Bohrungen 18 anlegt. Dadurch wird eine mechanische Verbindung zwischen Rohrleitung und den C-Profilelementen hergestellt. Gleichzeitig wird ein guter Wärmeübergang von der Rohrleitung 20 auf die C-Profilabschnitte 12 gewährleistet.

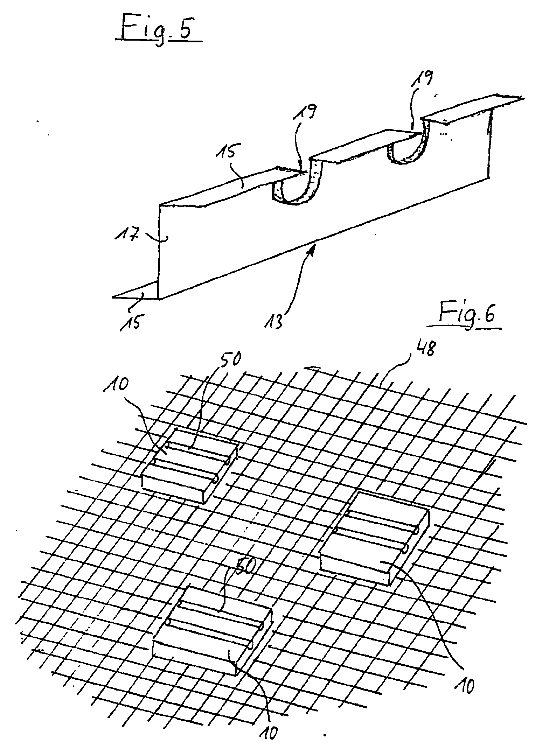

Eine alternative Ausführungsform eines Profilabschnittes ist in Figur 5 dargestellt. Der dargestellte Profilabschnitt 13 hat kein C-Profil sondern ein Z-Profil, d.h. seine Seitenschenkel 15 weisen nach entgegengesetzten Richtungen. Ferner sind anstelle einer Bohrung 18 in dem Mittelsteg 17 und einem Seitenschenkel 15 nach außen offene Kerben 19 ausgebildet, in welche jeweils eine Rohrleitung kraftschlüssig einklipsbar ist. Werden die Profilabschnitte 13 aneinandergereiht, bilden die miteinander fluchtenden Kerben 19 eine Rinne zur Aufnahme einer Rohrleitung. Selbstverständlich können die Kerben 19 auch in den C-Profilabschnitten 12 und die Bohrungen 18 in den Z-Profilabschnitten 13 vorgesehen sein.

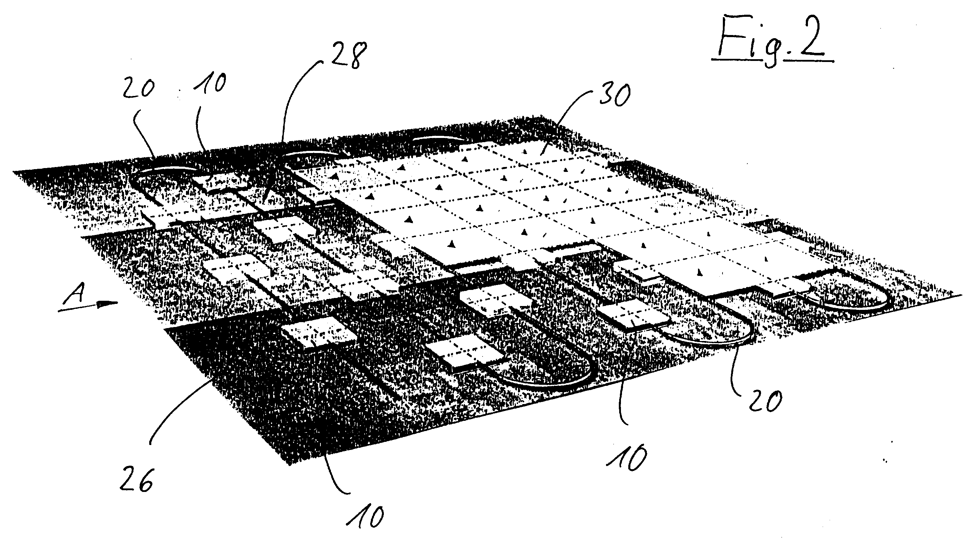

Fig. 2 zeigt eine auf einem Unterboden 26 angeordnete Wärmetauscheranordnung 28, die aus einer Vielzahl einzelner Wärmetauscherblöcke 10 besteht, die durch eine mäanderförmig verlegte Rohrleitung 20 miteinander verbunden sind. Auf den flachen Wärmetauscherblöcken 10 liegen Abdeckplatten 30, die beispielsweise ebenfalls aus Metall bestehen können und als Unterlage für einen Flüssig- oder Trockenestrich dienen können. Zwischen den Abdeckplatten 30 und dem Unterboden 26 kann Luft hindurchgeleitet werden, und zwar vorzugsweise in Richtung des Pfeiles A, so daß die Luft durch die Hohlräume 24 der einzelnen Wärmetauscherblöcke 10 hindurchströmt.

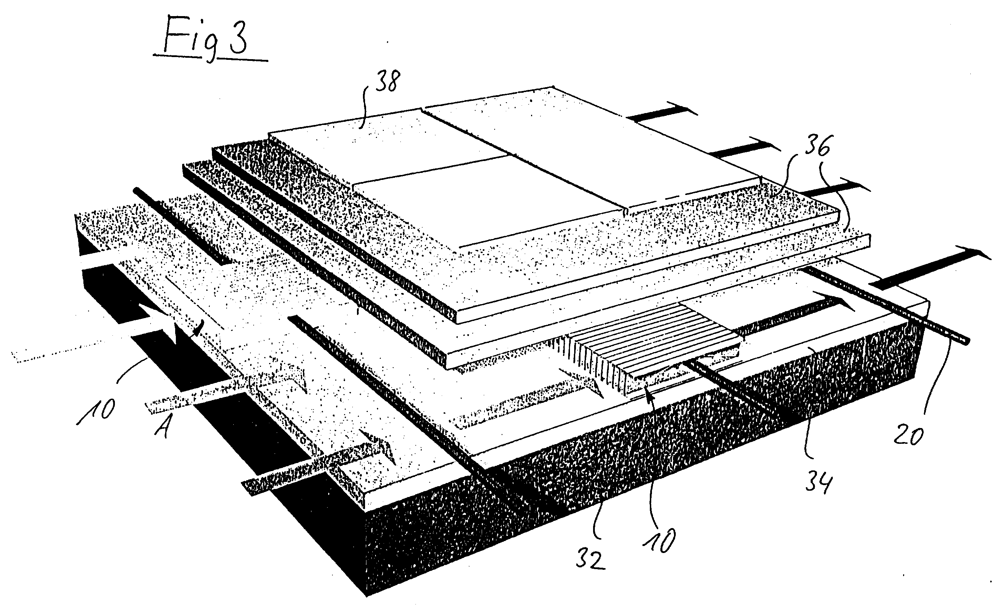

Dies ist in Figur 3 noch einmal näher erläutert. Sie zeigt den beispielsweise aus einer Betondecke 32 und einer Trittschalldämmung 34 bestehenden Unterboden 26, auf dem in der an Hand der Figur 2 beschriebenen Weise die Wärmetauscheranordnung 28 angeordnet ist. Auf den Wärmetauscherblöcken 10 liegen unmittelbar z.B. Trockenestrichplatten 36, welche den Oberboden bilden. Auf diesen Platten wiederum kann der eigentliche Bodenbelag aufgebracht werden, der im vorliegenden Beispiel aus Fliesen 38 besteht. Zwischen dem Unterboden 26 und dem Oberboden 36, 38 kann Luft hindurchgeleitet werden, deren Strömungsrichtung durch die Pfeile A bezeichnet ist.

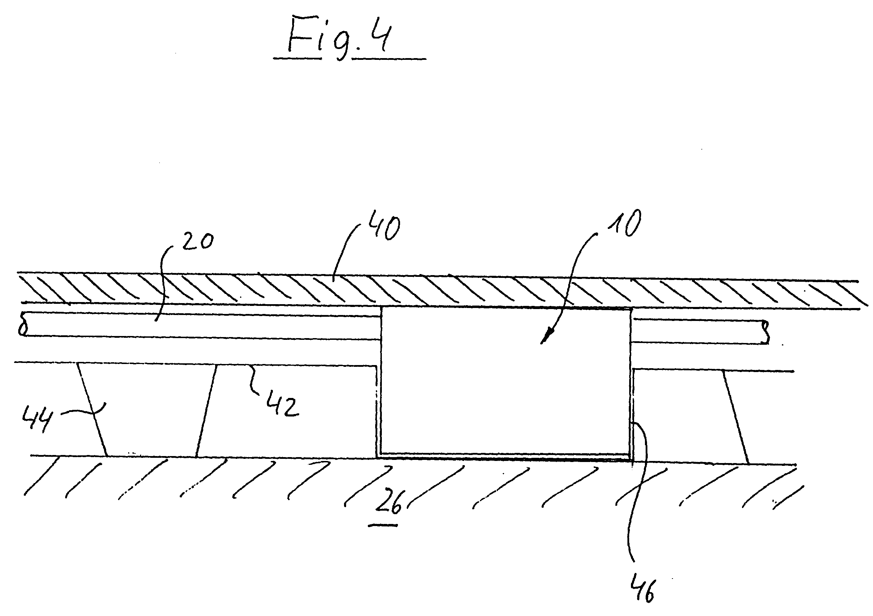

Figur 4 zeigt eine Ausführungsvariante, bei der zwischen dem schematisch angegebenen Oberboden 40 und dem Unterboden 26 eine Distanzplatte 42 angeordnet ist, die beispielsweise aus einer Kunststoffolie besteht, in der durch Tiefziehen höckerförmige Distanzelemente 44 und Aufnahmetaschen 46 ausgebildet sind, in welche die Wärmetauscherblöcke 10 der Wärmetauscheranordnung 28 eingelegt werden können. Die Tiefe der Taschen 46 ist so gewählt, daß die Wärmetauscherblöcke 10 nur teilweise in die Taschen 46 eintauchen und teilweise über die Distanzplatte 42 hinausragen, wobei auch die Rohrleitung oberhalb der Distanzplatte 42 liegt. Dadurch wird der zwischen dem Unterboden 26 und dem Oberboden 40 geschaffene Hohlraum durch die Distanzplatte 42 unterteilt, so daß zwei getrennte Hohlräume entstehen, die unterschiedlich mit Luft beaufschlagt werden können.

Es versteht sich, daß anstelle der Rohrleitungen oder zusätzlich zu diesen elektrische Heizkabel verlegt werden können.

Figur 6 schließlich zeigt ein Kunststoffgitter 48, wie es beispielsweise als Putzträger beim Bau verwendet wird. Auf dem Kunststoffgitter sind Wärmetauscherblöcke 10 in geeigneten Abständen voneinander befestigt, beispielsweise aufgeklebt, angeschweißt oder durch mechanische Befestigungsmittel wie mit Widerhaken versehene Klipse. Diese vorgefertigte Einheit aus Kunststoffgitter 48 und Wärmetauscherblöcken 10 erleichtert die Montage von Flächenheizungen. Das Gitter 48 wird zusammen mit den Wärmetauscherblöcken aufgerollt angeliefert. An Ort und Stelle werden dann der Raumgröße entsprechende Bahnen abgeschnitten und verlegt. Anschließend brauchen nur noch die Heizmittelrohre in die Rillen 50 in den Wärmetauscherblöcken eingeklipst zu werden.

## Patentansprüche

1. Flächige Wärmetauscheranordnung für Flächenheizungen in Bauwerken, dadurch **gekennzeichnet**, daß sie eine Mehrzahl von Wärmetauscherblöcken (10) umfaßt, die mit mindestens einer ein Wärmeträgermedium führenden Rohrleitung (20) in wärmeleitender Verbindung stehen und zwei zueinander parallele Auflageflächen (22) haben, zwischen denen die Rohrleitung (20) verläuft.

2. Wärmetauscheranordnung nach Anspruch 1, dadurch **gekennzeichnet**, daß jeder Wärmetauscherblock (10) eine Mehrzahl von senkrecht zu den Auflageflächen (22) und der zwischen diesen verlaufenden Rohrleitung (20) und parallel zueinander gerichteten Zwischenwänden hat, die jeweils paarweise einen beidendig offenen Hohlraum zwischen sich begrenzen.

3. Wärmetauscheranordnung nach Anspruch 1 oder 2, dadurch **gekennzeichnet**, daß die Wärmetauscherblöcke (10) aus Metall bestehen.

4. Wärmetauscheranordnung nach Anspruch 2 oder 3, dadurch **gekennzeichnet**, daß jeder Wärmetauscherblock (10) aus rechtwinkligen C- oder Z-Profilabschnitten (12) aufgebaut ist, die so aneinandergereiht sind, daß ihre miteinander fluchtenden Seitenschenkel (14) die Auflageflächen (22) und die zueinander parallelen Mittelstege (16) die Zwischenwände bilden.

5. Wärmetauscheranordnung nach Anspruch 4, dadurch **gekennzeichnet**, daß die Rohrleitung (20) mit den Profilabschnitten (12) starr verbunden ist.

6. Wärmetauscheranordnung nach einem der Ansprüche 2 bis 5,dadurch **gekennzeichnet**, daß in den Zwischenwänden miteinander fluchtende Bohrungen zur Aufnahme der Rohrleitungen ausgebildet sind.

7. Wärmetauscheranordnung nach einem der Ansprüche 1 bis 5, dadurch **gekennzeichnet**, daß in mindestens einer Auflagefläche Rillen (19) zur Aufnahme der Rohrleitungen ausgebildet sind.

8. Wärmetauscheranordnung nach Anspruch 7,dadurch **gekennzeichnet**, daß die Rillen (19) so bemessen sind, daß die Rohrleitungen kraftschlüssig in die Rillen (19) eindrückbar sind.

9. Wärmetauscheranordnung nach einem der Ansprüche 1 bis 8, dadurch **gekennzeichnet**, daß die Rohrleitung (20) aus Metall besteht.

10. Wärmetauscheranordnung nach einem der Ansprüche 1 bis 8, dadurch **gekennzeichnet**, daß die Rohrleitung (20) aus Kunststoff oder einem Verbundmaterial besteht.

11. Wärmetauscheranordnung nach einem der Ansprüche 1 bis 10, dadurch **gekennzeichnet**, daß die Wärmetauscherblöcke (10) in der gewünschten Wärmeleistung entsprechenden Abständen auf einer biegsamen Unterlage (48) befestigt sind.

12. Wärmetauscheranordnung nach Anspruch 11, dadurch **gekennzeichnet**, daß die biegsame Unterlage ein Kunststoffgitter (48) ist.

13. Wärmetauscheranordnung nach Anspruch 11, dadurch **gekennzeichnet**, daß die biegsame Unterlage eine Kunststoffolie ist.

14. Hohlraumboden mit einem zwischen einem Unterboden (26) und einem Oberboden (36, 38; 40) angeordneten Wärmetauscher (28) nach einem der Ansprüche 1 bis 6.

15. Hohlraumboden nach Anspruch 14, dadurch **gekennzeichnet**, daß die Wärmetauscherblöcke (10) direkt an dem Unterboden (26) und dem Oberboden (36, 38) anliegen.

16. Hohlraumboden nach Anspruch 15, dadurch **gekennzeichnet**, daß die Wärmetauscherblöcke (10) auf einer zwischen Unterboden (26) und Oberboden (40) liegenden Distanzplatte (42) angeordnet sind, die zur Auflage auf dem Unterboden (26) bestimmte Distanzelemente (44) und Aufnahmetaschen (46) zur teilweisen Aufnahme der Wärmetauscherblöcke (10) hat.
